# EUROPEAN PATENT SPECIFICATION

(11) **EP 0 954 701 B1**
(45) Date of publication and mention of the grant of the patent: **30.05.2001**
(21) Application number: 97912077.1
(22) Date of filing: 18.11.1997
(51) Int. Cl.: F03D 1/06, F03D 7/02, F03D 11/00

(54) **THE USE OF A TURBULATOR FOR DAMPING STALL VIBRATIONS IN THE BLADES OF A WIND TURBINE**
GEBRAUCH EINES TURBULENZERZEUGES UM BEI DEN FLÜGELN EINER WINDTURBINE VIBRATIONEN DURCH DAS ABREISSEN DER STRÖMUNG ZU VERMEIDEN
UTILISATION D'UN DISPOSITIF PROVOQUANT DES TURBULENCES POUR AMORTIR LES VIBRATIONS DE DECROCHAGE DES PALES D'UNE EOLIENNE

(30) Priority: 18.11.1996 DK 131196
(43) Date of publication of application: 10.11.1999
(73) Proprietor: LM GLASFIBER A/S, 6640 Lunderskov (DK)
(72) Inventor: STIESDAL, Henrik, DK-5000 Odense C (DK); VINTHER, Soren, DK-7400 Herning (DK)
(74) Representative: Jensen, Peter Kim
(86) International application number: DK9700529
(87) International publication number: WO9822711

(56) References cited:
- DK-U- 9 500 238
- DERWENT'S ABSTRACT, No. 97-117539/11, Week 9711; & RU,C,2 063 545 (OBSCHEMASH INZHINIRING CO LTD), 10 July 1996.

## Description

### Technical Field

The invention relates to the use of turbulator for damping or completely preventing stall vibrations in wind turbine blades and to a wind turbine having a blade provided with a turbulator. The expression "turbulator" denotes in this context a turbulence inducing means.

### Background Art

It is known that so-called stall vibrations occur in the wind turbine blades under operation high winds. The vibrations may occur both in flap-wise direction (ie perpendicular to a plane through the leading and trailing edge of the blade) and in edge-wise direction (ie in the plane through the leading and trailing edge of the blade) as well as in combined directions. The stall vibrations can be very severe and seriously reduce the life of the blades. A particularly adverse circumstance is that the symmetrical condition in the edge-wise vibration state, in which two blades vibrate in phase opposition, often makes it difficult to recognise the stall vibrations from the stationary part of the wind turbine. The blades may thus be in a critical state with high vibration amplitudes without error signals being given by a normal vibration warning device.

It is known that stall vibrations mainly occur on certain blade types and maybe even only when using certain types of wind turbines. The reason herefor is not commonly known and no analytic methods exist to pre-determine whether a given blade type, possibly in connection with a specific type of wind turbine, will cause stall vibrations.

Tests carried out by the inventors have shown that a great risk of stall vibrations in a given blade type is involved when the blade is mounted on one type of wind turbine having certain structure dynamic properties and only a small risk or none at all is involved when the blade is mounted on another type of turbine having other structure dynamic properties. These test results are not commonly known.

It is known that the occurrence of stall vibrations may be prevented by shutting down operation in high winds. The drawback of this option is that it may result in a reduction in or shut-down of the operation already at wind speeds in the range of 16- 18 m/s., while modern wind turbines otherwise usually are expected to have a cut-out wind speed of 25 m/s.. The loss of production resulting from the shut-down of the operation in the frequently occurring higher wind speeds are in many instances unacceptable.

It is also known that stall vibrations may be dampen by built-in vibration dampers in the blades. The drawback of this option is that the mere size of a vibration damper for a large wind turbine blade is considerable and substantial costs are thus incurred at the use thereof and further in many cases maintenance is required.

Apart from the possibility of built-in vibration dampers no methods for damping stall vibrations are presently known.

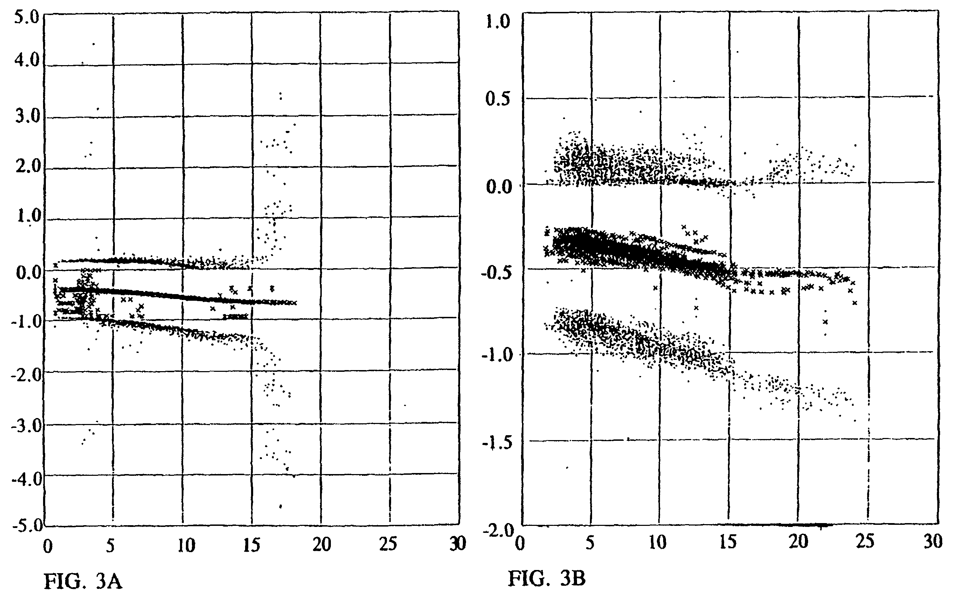

It is known that the lift properties for a blade cross-section with a given profile may be altered in various ways. One way is to mount a turbulator on or close to the leading edge of the blade. The use of such turbulators on aeroplanes are known. On wind turbines turbulators in form of stall strips are exclusively used for adjusting the power curve of the turbine or in particular cases for altering the noise emission of the blade, (confer Danish utility model No DK 9500238 W, especially Fig. 3). Further Derwent's abstract No 97-117539/11, week 9711, Abstract of Ru. 2063545 discloses a turbulator of triangular cross-section arranged at the leading edge of a rotor blade.

### Brief Description of the Invention

The object of the invention is to provide a particularly simple manner for damping or preventing stall vibrations.

This object is obtained by means of a wind turbine having the features set forth in claim 1. The strip-shaped turbulator segments arranged interspaced on the leading edge of a wind turbine blade result in a hitherto unknown and surprisingly advantageous damping or a complete removal of stall vibrations in situations, in which stall vibrations otherwise would be expected due to the combination of wind turbine blade and wind turbine structure used, and in which stall vibrations hitherto have been considered a serious problem which could only be solved satisfactorily by using built-in vibration dampers.

The invention thus enables operation of types of wind turbines, where the cut-out wind speed hitherto has had to be reduced due to the risk of stall vibrations in wind speeds up to the normal cut-out wind speed of typically 25 m/s.. As result the profitability is improved considerably.

Compared to vibration dampers the present invention is advantageous in that a built-in device of a considerable size and maintenance thereof is not required.

Furthermore the invention is advantageous in that it is very suitable for subsequent mounting. Thus, in a wind turbine in which the combination of structure dynamics and aerodynamic allows stall vibrations said vibrations can be dampened or prevented by means of the present invention in a particularly simple and inexpensive manner.

Finally the invention is advantageous in that an embodiment thereof, which is very effective in damping stall'vibrations, also has a positive influence on the power curve of the wind turbine. As a result a particularly surprising effect of the invention is obtained.

Advantageous embodiments of the invention are disclosed in the sub-claims.

The expression "stall vibrations" (sometimes denoted stall-induced vibrations) on wind turbines have been used since the 1980'ies. However, the first observations of this phenomenon on large wind turbines have later proved to be misinterpreted. In practice only in recent years has the phenomenon been found in commercial wind turbines. Consequently the knowledge available about the phenomenon, its origin and the remedy thereof is rather limited.

Based on their own tests the inventors have the following understanding of stall vibrations:

In operation, the blades of stall regulated wind turbines may be in a state in which the aerodynamic damping is small or negative. At very negative damping the total damping, which is the sum of the aerodynamic and the structural damping, can become negative. The wind turbine may then become self-excited. The vibrations do not necessarily depend on a coupling between the individual blades and most likely the vibrations have high amplitudes in flap-wise direction. This type of vibrations was assumed to be observed on the Nibe-A wind turbine in the early 1980'ies, but later measurements revealed that the turbine did not enter into such a state.

Another type of stall vibrations seem to occur when the total damping not necessarily becomes negative, but when the combination of little damping and aeroelastic feedback result in instability. This type of stall vibrations may occur when the edge-wise natural frequency of the blades is close to the second harmonic tilt or yaw frequency. During the vibration per se an aeroelastic coupling takes place between the edge-wise movements of the blades in the first vibration mode and the flap-wise movements in the second tilt or yaw mode. As the deformations at the blade root in flap-wise direction not necessarily are particularly serious in the second mode, the phenomenon is primarily observed by measurements on the blade root as deformation in edge-wise direction. This phenomenon is therefore often called edge vibrations.

Based on the above knowledge, of which much are not commonly known, in general stall vibrations can be dampened or prevented by increasing the aerodynamic damping. Edge vibrations may furthermore be dampened or prevented by altering the dynamics of the wind turbine such that the edge-wise natural frequency is further apart from the second harmonic yaw frequency. The present invention aims at the first solution.

Preferably, the increase in the aerodynamic damping is obtained by using aerodynamic modifications which do not impair the aerodynamic permanence of the dampened blade. Tests have shown that turbulators arranged on the leading edge of the blade are suitable for this purpose. The detailed understanding of how the increased aerodynamic damping is obtained is not quite established, inter alia as the damping conditions at normal, non-modified, aerodynamic profiles on wind turbine blades are not quite established. It is assumed that the effect is due to a combination of partly a reduced Cl-max. (maximum lift coefficient) of the modified profile and partly (and partly as a result of the reduced Cl-max.) a reduced hysteresis loop of the profile in stall. Moreover - although depending on the practical design - the turbulator comprises the feature that it in its stall state is able to effect a considerably larger area of the blade and not merely the area immediately behind the turbulator. This effect enables a turbulator of a length of only 2-3 % of the length of the blade to effectively dampen the edge vibrations.

### Brief Description of the Drawings

Advantageous, practical embodiments of the invention are explained in detail below. Reference is made to the drawings, in which
Fig. 1 illustrates an example of stall vibrations,
Fig. 2 is a diagrammatic view of a known turbulator arranged on the leading edge of a wind turbine blade,
Fig. 3 is an example of how the use of the turbulator in Fig. 2 removes stall vibrations,
Fig. 4 is an example of how the turbulator may be arranged in segments,
Fig. 5 is an example of how the segmented turbulator improves the power curve of the wind turbine.

### Best Mode for Carrying out the Invention

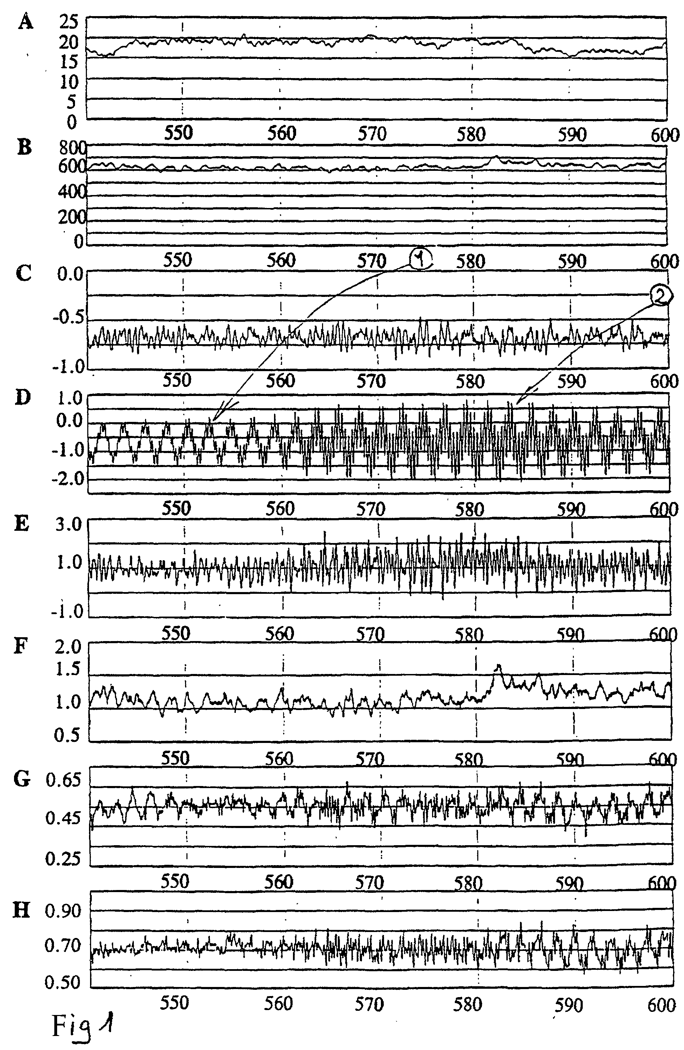

Fig. 1 illustrates an example of stall vibrations. The figure illustrates the relation between different parameters and time of a vibration course, the time in seconds being indicated on the abscissa. From the top the ordinate shows:
A: the wind speed (m/s.);
B: power (kW);
C: the flap-wise blade root moment;
D: the edge-wise blade root moment;
E: the tilt moment;
F: the rotation moment; and
G and H: the moment in the tower base in two directions perpendicular to each other.

All moments are presented as uncalibrated output voltage from strain gauge amplifiers. Prior to the occurrence of vibrations the signal for the edge-wise blade root moment is dominated by the dead load. At the approximate time 1 the vibrations begin when the wind speed exceeds the limit of the stable state. The vibration reaches its maximum amplitude at the time 2, said amplitude being considerably above that caused by the normal load from the dead load and reduces the life of the blade considerably, if not controlled.

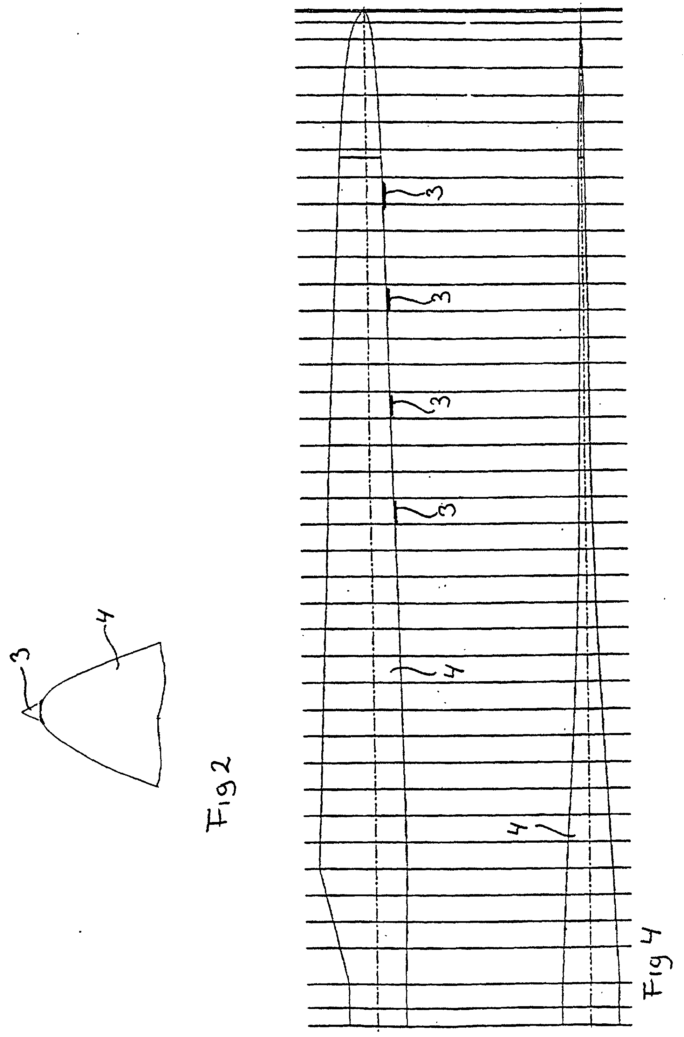

Fig. 2 illustrate an example of a turbulator in form of a stall strip 3 having an equilateral, triangular cross section with a side length of approximately 10 mm. The turbulator is arranged on the leading edge of the blade 4 in the stagnation point. The strip has a length of 500 mm and is arranged from 3300 mm from the blade tip and towards the centre.

Fig. 3 is an example of how the use of the turbulator in Fig. 2 removes stall vibrations. The figure comprises two x-y diagrams of the edge-wise blade root moment versus the wind speed in m/s.. The moment is rendered as uncalibrated output voltage from strain gauge amplifiers. The mean values are shown in the x-y diagrams by means of a cross and the minimum and maximum values by means of a dot. In one diagram (Fig 3A), which is recorded prior to the use of the turbulator according to the invention, the blades begins to vibrate at approximately 16 m/s. at which point the minimum and maximum values diverge from the mean value. At a slightly higher wind speed, the amplitude of the vibrations become unacceptable. In the second diagramme (Fig. 3B), which is recorded after the use of the turbulator according to the invention, the blades do not vibrate at any time and the operation can continue until the normal cut-out wind speed of 25 m/s is reached.

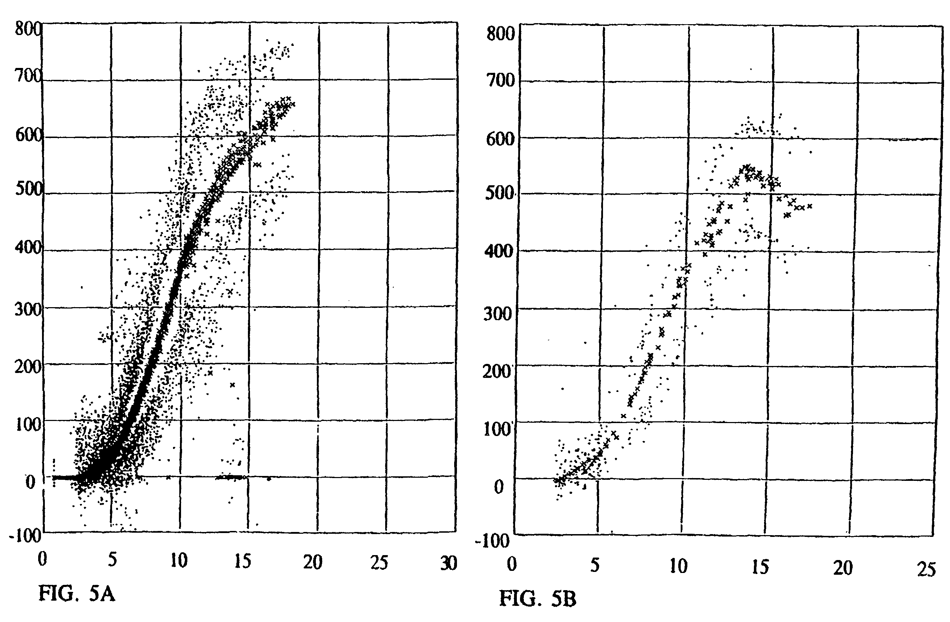

Fig. 4 is a top and front view of an example of how the turbulator may be arranged as stall strips in segments. A 10 mm triangular strip as shown in Fig. 2 is used. Four segments, each of a length of 500 mm, are arranged on the leading edge of a LM 19.1 blade. The outermost segment is arranged with the largest radius of 3300 mm from the tip of the blade 4. The inner segments are evenly interspaced with 1500 mm. The total length of the blade is approximately 20 m.

Fig. 4 illustrates an example of how the segmented turbulator in addition to preventing stall vibrations also improves the power curve of the wind turbine. The figure comprises two x-y diagrammes of the power in kW versus the wind speed in m/s. In the x-y diagrammes the mean values are indicated by means of a cross and the minimum and maximum values by means of a dot. In one diagrammes (Fig. 5A), which is recorded prior to the use of the turbulator according to the invention, the power limitation is only gradual and no actual maximum value is obtained. The desired power of 550 kW is noticeably exceeded. In the second diagramme (Fig. 5B), which is recorded after the use of the segmented turbulator according to the invention, the power limitation is very prompt and a particularly beneficial power curve is obtained.

A turbulator and turbulator segments respectively formed as a stall strip with a triangular cross section have been illustrated and described above. However it should be noted that such a stall strip may have any advantageous cross section.

## Claims

1. A wind turbine having a blade (4) provided with a turbulator arranged in or close to the stagnation point, **characterised** in that it comprises at least two turbulator segments (3) formed by strips and arranged interspaced along the leading edge of the blade.

2. A wind turbine as claimed in claim 1, **characterised** in that each turbulator segment (3) is a substantially triangular strip.

3. A wind turbine as claimed in claim 1 or 2, **characterised** in that it comprises 2-10 turbulator segments (3), each having a length of 1-5% of the length of the blade (4) and arranged with interspaces or 1-15% or the length of the blade (4) on the leading edge from a point 1-20% of the length of the blade (4) from the blade tip and towards the centre.

4. A wind turbine as claimed in claim 1 or 2, **characterised** in that it comprises four turbulator segments (3), each having a length of approximately 2.5 % of the length of the blade (4) and arranged with interspaces of approximately 7.5 % of the length of the blade (4) on the leading edge from a point approximately 15% of the length of the blade (4) from the blade tip and towards the centre.

## Patentansprüche

1. Windturbine, die einen Flügel (4) mit einem Turbulenzerzeuger aufweist, der an oder nahe dem Stagnationspunkt angeordnet ist, **dadurch gekennzeichnet**, dass sie mindestens zwei Turbulenzerzeugersegmente (3) aufweist, die durch Leisten gebildet und mit Zwischenräumen längs der vorderen Kante des Flügels angeordnet sind.

2. Windturbine nach Anspruch 1, **dadurch gekennzeichnet,** dass jedes Turbulenzerzeugersegment (3) eine im Wesentlichen dreieckige Leiste ist.

3. Windturbine nach den Ansprüchen 1 oder 2, **dadurch gekennzeichnet,** dass sie 2 bis 10 Turbulenzerzeugersegmente (3) aufweist, die jeweils eine Länge von 1 bis 5 % der Flügellänge (4) haben, und die mit Zwischenräumen von 1 bis 15 % der Flügellänge (4) auf der vorderen Kante des Flügels von einem Punkt 1 bis 20% der Flügellänge (4) von der Flügelspitze in Richtung Mitte angeordnet sind.

4. Windturbine nach den Ansprüchen 1 oder 2, **dadurch gekennzeichnet,** dass sie vier Turbulenzerzeugersegmente (3) aufweist, die jeweils eine Länge von ungefähr 2.5% der Flügellänge (4) haben, und die mit Zwischenräumen von ungefähr 7.5% der Flügellänge (4) auf der vorderen Kante des Flügels von einem Punkt ungefähr 15% der Flügellänge (4) von der Flügelspitze in Richtung Mitte angeordnet sind.

## Revendications

1. Turbine éolienne comportant une lame (4) prévue avec un inducteur de turbulence agencé au point de stagnation ou près de celui-ci, caractérisée en ce qu'elle comprend au moins deux segments d'inducteur de turbulence (3) formés par des bandes et agencés en étant espacés l'un de l'autre le long du bord d'attaque de la lame.

2. Turbine éolienne selon la revendication 1, caractérisée en ce que chaque segment d'inducteur de turbulence (3) est une bande sensiblement triangulaire.

3. Turbine éolienne selon la revendication 1 ou 2, caractérisée en ce qu'elle comprend 2 à 10 segments d'inducteur de turbulence (3), chacun présentant une longueur de 1 à 5 % de la longueur de la lame (4) et étant agencé avec des espacements de 1 à 15% de la longueur de la lame (4) sur le bord d'attaque par rapport à un point situé à une distance de 1 à 20% de la longueur de la lame (4) de la pointe de la lame et en direction du centre.

4. Turbine éolienne selon la revendication 1 ou 2, caractérisée en ce qu'elle comprend quatre segments d'inducteur de turbulence (3), chacun présentant une longueur ayant approximativement 2,5 % de la longueur de la lame (4) et étant agencé avec des espacements ayant approximativement 7,5% de la longueur de la lame (4) sur le bord d'attaque par rapport à un point situé approximativement à 15% de la longueur de la lame (4) de la pointe de la lame et en direction du centre.
